# EUROPEAN PATENT APPLICATION

(11) **EP 4 610 514 A1**
(43) Date of publication of application: **03.09.2025**
(21) Application number: 25153321.2
(22) Date of filing: 22.01.2025
(51) Int. Cl.: F16F 9/05

(54) **PISTON, AIR SPRING AND MOTOR VEHICLE**

(30) Priority: 27.02.2024 CN 202410218171
(71) Applicant: Volvo Car Corporation, 405 31 Göteborg (SE)
(72) Inventor: FAN, Hongjun, Shanghai, 201815 (CN); LI, Gen, Shanghai, 201815 (CN)
(74) Representative: Maiwald GmbH

(57) **Abstract**

A piston for an air spring of a motor vehicle, an air spring and a motor vehicle. The piston includes a central rod; and a housing, including a top bracket, a bottom bracket and an external frame, wherein the top bracket is fixedly installed at a first end of the central rod, the bottom bracket is fixedly installed at a second end of the central rod opposite to the first end, and the external frame is connected between the top bracket and the bottom bracket around the central rod, the external frame is elastically deformable, so that an outline shape of the external frame is changeable to change a stiffness curve of the air spring.

## Description

This application claims the priority and benefits of the Chinese Patent Applications No. 202410218171.5, which was filed on February 27, 2024.

### TECHNICAL FIELD

Embodiments of the present application relate to a piston for an air spring of a motor vehicle, an air spring including the piston and a motor vehicle including the air spring.

### BACKGROUND

In the process of automobile chassis design and development, air spring has an important influence on vehicle handling stability and comfort. The stiffness curve and design load of air spring are particularly important, and it is the piston shape inside the air spring that affects the stiffness curve and design load. In the existing art, the piston is manufactured by adopting the aluminum reaming process or the injection molding process, and once formed, the structure cannot be changed. However, in the process of deriving different models from the same platform, due to the differences in vehicle weight and debugging style, there are often different air spring stiffness curves and design load requirements, which makes it necessary to redesign the structure of the piston inside the air spring every time a new model is developed, increasing the hardware series of the air spring on the same platform, which brings a lot of inconvenience to the production and manufacturing management.

### SUMMARY

In view of the above problems, the present application provides a piston for an air spring, and the outline shape of the piston can be changed, so that the air spring is more intelligent, and the products on the same platform can flexibly adapt to the requirements of different vehicle types on the stiffness curve and design load of the air spring.

The present application provides a piston for an air spring of a motor vehicle, wherein the piston includes:
a central rod; and
a housing, including a top bracket, a bottom bracket and an external frame, wherein the top bracket is fixedly installed at a first end of the central rod, the bottom bracket is fixedly installed at a second end of the central rod opposite to the first end, and the external frame is connected between the top bracket and the bottom bracket around the central rod,
wherein the external frame is elastically deformable, so that an outline shape of the external frame is changeable to change a stiffness curve of the air spring.

Advantageously, the top bracket includes a plurality of top spokes extending radially outward from the first end of the central rod to the external frame, and the top bracket is not elastically deformable.

Advantageously, the bottom bracket includes a plurality of bottom spokes extending radially outward from the second end of the central rod to the external frame, and the bottom bracket is not elastically deformable.

Advantageously, the piston further includes an intermediate bracket fixedly installed at an intermediate position between the first end and the second end of the central rod, and the intermediate bracket is not elastically deformable.

Advantageously, the external frame includes a plurality of circumferential support members arranged in a length direction of the central rod, and further includes a plurality of longitudinal support members arranged around the central rod in a circumferential direction, each of the plurality of longitudinal support members is fixedly connected to the plurality of circumferential support members, each of the plurality of longitudinal support members and each of the plurality of circumferential support members are elastically deformable.

Advantageously, the piston further includes an outer skin including a top skin, a bottom skin and a lateral skin, the top skin, the bottom skin and the lateral skin form an internal cavity, the top skin covers the top bracket, the bottom skin covers the bottom bracket, and the lateral skin is fixedly connected to the external frame, so that the outer skin wraps the housing in the internal cavity.

Advantageously, the piston further includes an air duct extending through the bottom skin to enter the internal cavity, and the air duct is connected to an external air source, so that air can be supplied to or extracted from the internal cavity to change an air pressure in the internal cavity, so that the lateral skin drives the external frame to deform.

Advantageously, the piston includes one or more adjustment mechanisms arranged in a length direction of the central rod, and the one or more adjustment mechanisms include a plurality of sliding rods extending outward from the central rod, a first end of each of the plurality of sliding rod is fixedly installed to the central rod, and a second end of each of the plurality sliding rods opposite to the first end is movably supported on the external frame, and second ends of the plurality of sliding rods are configured to be capable of moving toward or away from the central rod at the same time, thereby changing the outline shape of the external frame.

Advantageously, the one or more adjustment mechanisms include:
a top support, fixedly installed on the central rod, and first ends of the plurality of sliding rods being fixedly installed on the top support;
a bottom support, slidably installed to the central rod;
a plurality of connection rods, a first end of each of the plurality of connection rods being fixedly installed on the bottom support, and a second end of each of the plurality of connection rods being pivotally connected to a corresponding sliding rod; and
a driving mechanism, operatively coupled to the bottom support, to drive the bottom support to slide in the length direction of the central rod.

Advantageously, the top support includes an annular body and a plurality of support blocks extending radially outward from the annular body, and a number of the plurality of support blocks is the same as a number of the plurality of sliding rods, and each of the plurality of sliding rods is fixedly installed to a corresponding support block.

Advantageously, the top support includes an upper support and a lower support which are fixed together, wherein the upper support includes an upper annular body and a plurality of upper support blocks extending radially outward from the upper annular body, and the lower support includes a lower annular body and a plurality of lower support blocks extending radially outward from the lower annular body; upon the upper support and the lower support being fixed together, the upper annular body and the lower annular body form the annular body, and the upper support blocks and the lower support blocks are arranged in one-to-one correspondence, to form the plurality of support blocks.

Advantageously, the first end of each of the plurality of sliding rods includes a first circular protrusion and a second circular protrusion extending outward from the first end in opposite directions,
each of the plurality of upper support blocks includes a first upper semi-circular groove and a second upper semi-circular groove which are opened downwards at both sides, and each of the plurality of lower support blocks includes a first lower semi-circular groove and a second lower semi-circular groove which are opened upwards at both sides,
upon the upper support and the lower support being fixed together, the first upper semi-circular groove and the first lower semi-circular groove are butted together to form a first circular groove, and the second upper semi-circular groove and the second lower semi-circular groove are butted together to form a second circular groove, the first circular groove is used for receiving the first circular protrusion of a sliding rod of the plurality of sliding rods, and the second circular groove is used for receiving the second circular protrusion of the sliding rod .

Advantageously, the second end of each of the plurality of connection rods has a U-shape to form a groove, and a part of each of the plurality of sliding rods is pivotally installed in the groove of a corresponding connection rod.

Advantageously, the bottom support includes an annular body and a plurality of support blocks extending radially outward from the annular body, and a number of the plurality of support blocks is the same as a number of the plurality of connection rods, and the first end of each of the plurality of connection rods is fixedly installed to a corresponding support block.

Advantageously, the bottom support includes an upper support and a lower support which are fixed together, the upper support includes an upper annular body and a plurality of upper support blocks extending radially outward from the upper annular body, the lower support includes a lower annular body and a plurality of lower support blocks extending radially outward from the lower annular body, upon the upper support and the lower support being fixed together, the upper annular body and the lower annular body form the annular body, and the plurality of upper support blocks and the plurality of lower support blocks are arranged in one-to-one correspondence, to form the plurality of support blocks.

Advantageously, the first end of each of the plurality of connection rods includes a first circular protrusion and a second circular protrusion extending outward from the first end in opposite directions,
each of the plurality of upper support blocks includes a first upper semi-circular groove and a second upper semi-circular groove which are opened downwards at both sides, and each of the plurality of lower support block includes a first lower semi-circular groove and a second lower semi-circular groove which are opened upwards at both sides,
upon the upper support and the lower support being fixed together, the first upper semicircular groove and the first lower semicircular groove are butted together to form a first circular groove, and the second upper semicircular groove and the second lower semicircular groove are butted together to form a second circular groove, wherein the first circular groove is used for receiving the first circular protrusion of a connection rod of the plurality of connection rods, and the second circular groove is used for receiving the second circular protrusion of the connection rod .

Advantageously, the driving mechanism includes:
a motor, installed to the central rod through a motor bracket;
a gear, installed to the motor;
a rack, movably installed to the central rod and fixedly installed to the bottom support, and configured to mesh with the gear to move in the length direction of the central rod upon the motor driving the gear to rotate.

The present application further provides an air spring for a motor vehicle, wherein the air spring includes any one of the abovementioned pistons.

The present application further provides a motor vehicle, wherein the motor vehicle includes the abovementioned air spring.

### BRIEF DESCRIPTION OF DRAWINGS

The above and other features and advantages of exemplary embodiments of the present disclosure will become more apparent from the following detailed description taken in conjunction with the accompanying drawings, which are for illustrative purposes only and are not intended to limit the scope of the present disclosure in any way, wherein:
Fig. 1 shows an external view of a piston according to a first embodiment of the present application.
Figs. 2(a) and 2(b) show partially exploded views of a piston according to a first embodiment of the present application.
Fig. 3 shows a perspective view of a housing of a piston according to a first embodiment of the present application.
Fig. 4 shows an external view of a piston according to a second embodiment of the present application.
Fig. 5 shows a perspective view of a piston according to a second embodiment of the present application with the external frame removed.
Fig. 6 shows a perspective view of an adjustment mechanism of a piston according to a second embodiment of the present application.
Fig. 7 shows an exploded view of a driving mechanism of an adjustment mechanism of a piston according to a second embodiment of the present application.
Fig. 8 shows an exploded view of a top support of an adjustment mechanism of the piston according to a second embodiment of the present application.
Fig. 9 shows an exploded view of a bottom support of an adjustment mechanism of a piston according to a second embodiment of the present application.
Fig. 10 shows a lower support of a top support or a bottom support of an adjustment mechanism of a piston according to a second embodiment of the present application.
Fig. 11 shows an enlarged view in which a sliding rod and a connection rod of a piston according to a second embodiment of the present application are connected together.

### DETAILED DESCRIPTION

In order to make the purpose, technical details and advantages of the technical solution of the present disclosure more clear, the technical solution of the embodiment of the present disclosure will be described clearly and completely with the accompanying drawings of specific embodiments of the present disclosure. Like reference numerals in the drawings represent like parts. It should be noted that the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Compared with the embodiments shown in the attached drawings, the feasible embodiments within the protection scope of the present disclosure may have fewer components, other components not shown in the attached drawings, different components, components arranged differently or components connected differently, etc. Furthermore, two or more components in the drawings may be implemented in a single component, or a single component shown in the drawings may be implemented as a plurality of separate components.

Unless otherwise defined, technical terms or scientific terms used herein shall have their ordinary meanings as understood by people with ordinary skills in the field to which the present disclosure belongs. The words "first", "second" and similar words used in the specification and claims of the patent application of the present disclosure do not indicate any order, quantity or importance, but are only used to distinguish different components. When the number of parts is not specified, the number of parts can be one or more; Similarly, similar words such as "one", "the" and "said" do not necessarily refer to quantity limitation. Similar words such as "including" or "comprising" refers to that the elements or objects appearing before the word cover the elements or objects listed after the word and their equivalents, without excluding other elements or objects. "Up", "Down", "Left" and "Right" are only used to indicate the relative orientation relationship when the equipment is used or the orientation relationship shown in the attached drawings. When the absolute position of the described object changes, the relative orientation relationship may also change accordingly.

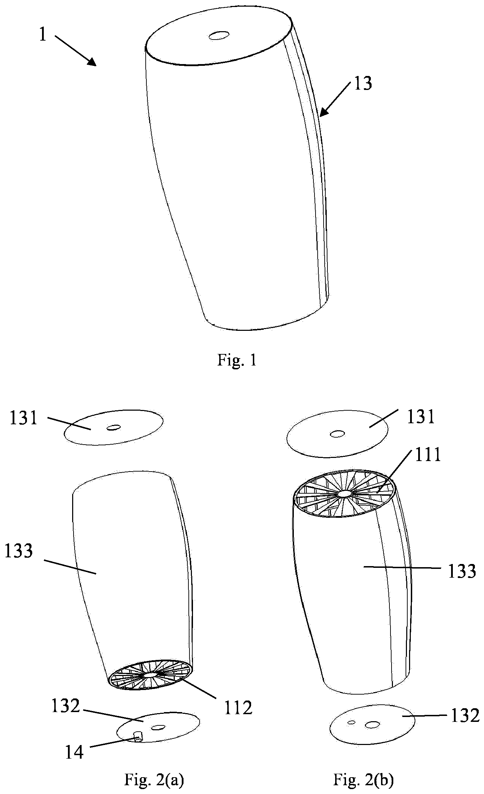

Figs. 1 to 3 show a piston according to a first embodiment of the present application. The piston 1 includes a housing 11, the housing 11 includes a top bracket 111, a bottom bracket 112 and an external frame 113. A central rod 12 passes through the housing 11 and is fixedly installed to the top bracket 111 and the bottom bracket 112, and the external frame 113 is connected between the top bracket 111 and the bottom bracket 112 around the central rod. The top bracket 111 is fixedly installed to a first end of the central rod 111, and the bottom bracket 112 is fixedly installed to a second end of the central rod, the second end is opposite to the first end.

The external frame 113 is elastically deformable, so that the outline shape of the external frame is changeable to change the stiffness curve of an air spring, so that different stiffness curves can be obtained by using the same piston without replacing the piston to adapt to different motor vehicle types.

The top bracket 111 includes a plurality of top spokes 1111 extending radially outward from the first end of the central rod 12 to the external frame 113, and the top bracket is not elastically deformable. Similarly, the bottom bracket 112 includes a plurality of bottom spokes 1121 extending radially outward from the second end of the central rod 12 to the external frame 113, and the bottom bracket is not elastically deformable.

In the first embodiment of the present application, the piston 1 further includes an outer skin 13, which includes a top skin 131, a bottom skin 132 and a lateral skin 133, the top skin 131, the bottom skin 132 and the lateral skin 133 form an internal cavity. The top skin 131 covers the top bracket 111, the bottom skin 132 covers the bottom bracket 112, and the lateral skin 133 is fixedly connected (for example, bonded) to the external frame 113, so that the outer skin 13 wraps the housing in the internal cavity.

The piston 1 also includes an air duct 14, the air duct 14 is installed to the bottom skin 132 and extends through the bottom skin 132 to enter the internal cavity. The air duct is connected to an external air source (not shown), so that air can be supplied to or extracted from the internal cavity to change the air pressure in the internal cavity, so that the lateral skin 133 drives the external frame 113 to deform to change the outline shape of the external frame.

The first embodiment of the present application changes the outline shape of the external frame of the piston through air pressure adjustment. The air pressure adjustment can be realized by the electronic control unit of the motor vehicle. For example, when developing a certain vehicle type, the air spring of a certain vehicle type has a predetermined stiffness curve, the predetermined stiffness curve is input into the electronic control unit of the motor vehicle, and the electronic control unit calculates the predetermined air pressure (i.e., the predetermined outline shape) in the internal cavity of the piston based on the predetermined stiffness curve, and then the electronic control unit controls the external air source to inflate or deflate the internal cavity through the air duct 14 to achieve the predetermined outline shape. It can be understood that the electronic control unit can be connected to and controlled by an external air source in any suitable way.

In the first embodiment of the present application, the piston 1 further includes an intermediate bracket 15 fixedly installed at an intermediate position between the first end and the second end of the central rod. Similar to the top bracket and the bottom bracket, the middle bracket is not elastically deformable and also includes a plurality of spokes.

The external frame 113 includes a plurality of circumferential support members 1131 arranged in a length direction of the central rod 12, and further includes a plurality of longitudinal support members 1132 arranged around the central rod in a circumferential direction. Each of the plurality of longitudinal support members 1132 is fixedly connected (for example, welded, bonded, etc.) to the plurality of circumferential support members 1131, and each of the plurality of longitudinal support members and each of the plurality of circumferential support members are elastically deformable.

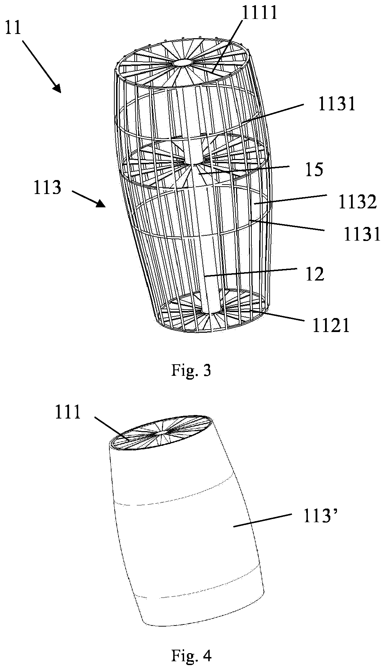

Figs. 4 to 11 show a piston according to a second embodiment of the present application. The main difference between the piston of the second embodiment and the piston of the first embodiment lies in that, the way of changing the outline shape of the external frame of the piston of the second embodiment is mechanical.

Like the first embodiment, the piston 1 includes a central rod 12 and a housing 11, and the housing 11 includes a top bracket 111, a bottom bracket 112 and an external frame 113'. However, in the second embodiment, the external frame 113' itself is a skin, that is, it is equivalent to the lateral skin in the first embodiment, which is fixedly installed to the top bracket 111 and the bottom bracket 112.

In order to change the outline shape of the external frame 113' (skin), the piston of the second embodiment includes one or more adjustment mechanisms 16, the one or more adjustment mechanisms 16 are arranged in the length direction of the central rod and installed to the central rod.

The one or more adjustment mechanisms include a top support 161 fixedly installed to the central rod 12, a plurality of sliding rods 162 with first ends fixedly installed to the top support and second ends movably supported on the external frame 113', and the second ends of the sliding rods are configured to move towards or away from the central rod at the same time, thereby changing the outline shape of the external frame. The bottom bracket 163 is slidably installed to the central rod 12, and a first end of each of the plurality of connection rods 164 is fixedly installed to the bottom bracket 163 and a second end of each of the plurality of connection rods 164 is pivotally connected to a corresponding sliding rod. The driving mechanism 165 is operatively coupled to the bottom support to drive the bottom support to slide in the length direction of the central rod, thereby driving the second end of the sliding rod to move through the connection rod.

The top support and the bottom support are the same or different. In this example, the top support and the bottom support are the same. The top support 161 includes an annular body and a plurality of support blocks extending radially outward from the annular body, and the number of the support blocks is the same as that of the plurality of sliding rods 162, and each of the plurality of sliding rods is fixedly installed to a corresponding support block.

The top support 161 includes an upper support 1611 and a lower support 1612 which are fixed together. The upper support 1611 includes an upper annular body 16111 and a plurality of upper support blocks 16112 extending radially outward from the upper annular body, and the plurality of upper support blocks 16112 are spaced apart in the circumferential direction. The lower support 1612 includes a lower annular body 16121 and a plurality of lower support blocks 16122 extending radially outward from the lower annular body, and the plurality of lower support blocks 16122 are spaced apart in the circumferential direction. Upon the upper support and the lower support being fixed together to form the top support 161, the upper annular body and the lower annular body form the annular body, and the plurality of upper support blocks and the plurality of lower support blocks are arranged in one-to-one correspondence to form the plurality of support blocks.

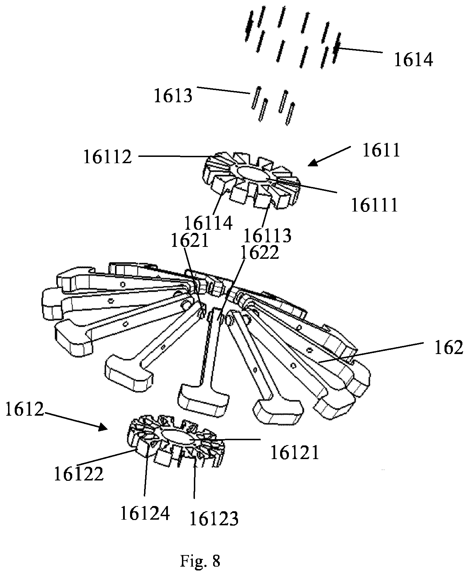

As illustrated by Fig. 8, the first end of each of the plurality of sliding rods 162 includes a first circular protrusion 1621 and a second circular protrusion 1622 extending outward from the first end in opposite directions. That is, the first circular protrusion 1621 and the second circular protrusion 1622 protrude from the both sides of each of the plurality of sliding rods.

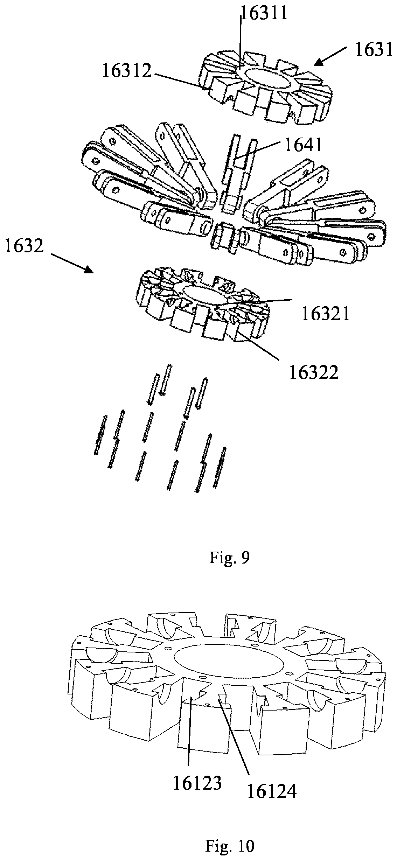

As illustrated by Fig. 8, each of the plurality of upper support blocks 16112 includes a first upper semi-circular groove 16113 and a second upper semi-circular groove 16114 which are opened downward at both sides thereof, and each of the plurality of lower support blocks 16122 includes a first lower semi-circular groove 16123 and a second lower semi-circular groove 16124 which are opened upward at both sides thereof. Fig. 10 shows a perspective view of the lower support block, and those skilled in the art will understand that the upper support block can be obtained only by turning the lower support block upside down.

Upon the upper support 1611 and the lower support 1612 being fixed together (for example, through internal bolts 1613 and external bolts 1614, the internal bolts pass through the upper annular body and the lower annular body and the external bolts pass through each support block), the first upper semicircular groove and the first lower semicircular groove are butted together to form a first circular groove, and the second upper semicircular groove and the second lower semicircular groove are butted together to form a second circular groove. The first circular groove is used for receiving the first circular protrusion of a sliding rod of the plurality of sliding rods, and the second circular groove is used for receiving the second circular protrusion of the sliding rod. Thus, the first end of each of the plurality of sliding rods is fixedly installed to each of the plurality of support blocks.

As illustrated by Fig. 9, similarly, the bottom support also includes an annular body and a plurality of support blocks extending radially outward from the annular body, the number of the plurality of support blocks is the same as that of the plurality of connection rods, and the first end of each of the plurality of connection rods is fixedly installed to a corresponding support block.

As illustrated by Fig. 9, similarly, the bottom support 163 includes an upper support 1631 and a lower support 1632 which are fixed together. The upper support 1631 includes an upper annular body 16311 and a plurality of upper support blocks 16312 extending radially outward from the upper annular body, and the lower support 1632 includes a lower annular body 16321 and a plurality of lower support blocks 16322 extending radially outward from the lower annular body. Upon the upper support and the lower support being fixed together, the upper annular body and the lower annular body form the annular body, and the plurality of upper support blocks and the plurality of lower support blocks are arranged in one-to-one correspondence, to form a plurality of support blocks.

Similar to a plurality of sliding rods, the first end of each of the plurality of connection rods 164 includes a first circular protrusion and a second circular protrusions extending outward from the first end in opposite directions. Each of the plurality of upper support blocks includes a first upper semi-circular groove and a second upper semi-circular groove which are opened downwards at both sides thereof, and each of the plurality of lower support block includes a first lower semi-circular groove and a second lower semi-circular groove which are opened upwards at both sides thereof. Upon the upper support and the lower support being fixed together (for example, by internal bolts and external bolts), the first upper semi-circular groove and the first lower semi-circular groove are butted together to form a first circular groove, and the second upper semi-circular groove and the second lower semi-circular groove are butted together to form a second circular groove. The first circular groove is used for receiving the first circular protrusion of a connection rod of the plurality of connection rods, and the second circular groove is used for receiving the second circular protrusion of the connection rod. Thus, the first end of each of the plurality of connection rods is fixedly installed to each of the plurality of support blocks.

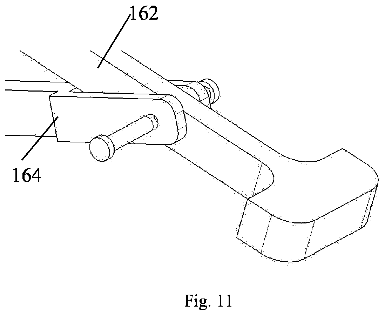

The second end of each of the plurality of connection rods 164 has a U-shape to form a groove 1641, and a part of each of the plurality of sliding rods 162 is pivotally installed in the groove 1641 of a corresponding connection rod, as illustrated by Fig. 11.

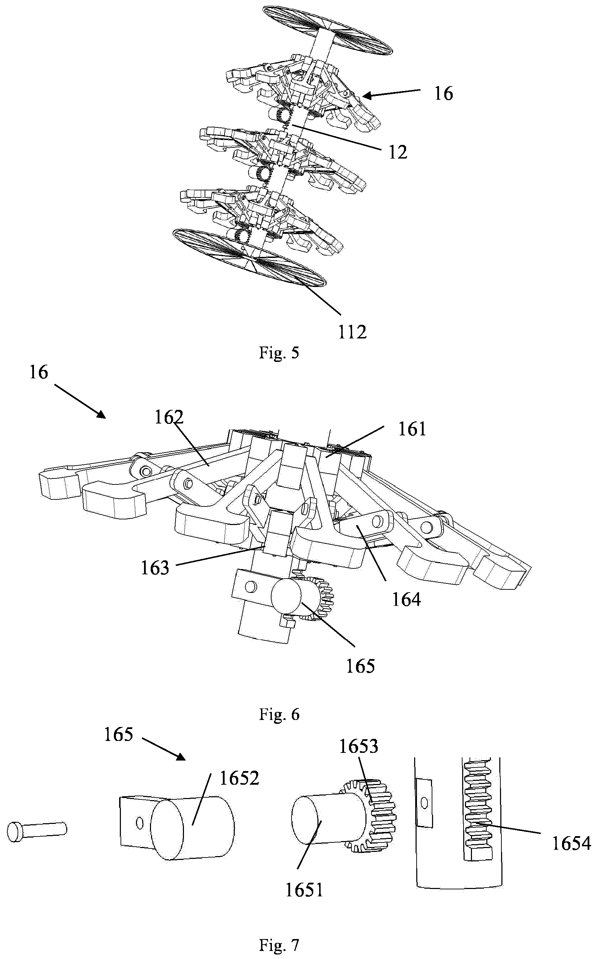

As illustrated by Fig. 7, the driving mechanism 165 includes a motor 1651, which is installed in a motor bracket 1652, and the motor bracket is fixedly installed to the central rod (for example, by bolts). The gear 1653 is installed to the motor 1651, and the rack 1654 is movably installed to the central rod 12 and fixedly installed to the bottom support. When the motor 1651 drives the gear 1653 to rotate, the gear 1654 meshes with the rack 1654, so that the rack 1654 moves in the length direction of the central rod, and then the bottom support moves in the length direction of the central rod, so that the connection rods move up and down, and then the second ends of the plurality of sliding rods move towards or away from the central rod on the external frame at the same time, so as to change the outline shape of the external frame.

In the example, three adjustment mechanisms are provided in the length direction of the central rod, but those skilled in the art will understand that an appropriate number of adjustment mechanisms can be provided as required.

The second embodiment of the present application changes the outline shape of the external frame of the piston through mechanical adjustment. Mechanical adjustment can be achieved by the electronic control unit of the motor vehicle. For example, when developing a certain vehicle type, the air spring of the certain vehicle type has a predetermined stiffness curve, the predetermined stiffness curve is input into the electronic control unit of the motor vehicle, and the electronic control unit calculates the predetermined outline shape of the external frame of the piston based on the predetermined stiffness curve, and then the electronic control unit controls the driving mechanism to drive the bottom support, thereby simultaneously moving the second end of the sliding rod to realize the predetermined outline shape. It can be understood that the electronic control unit can be connected to and control the driving mechanism in any suitable way.

Through the piston provided by the present disclosure, the outline shape of the piston can be changed, so that the piston on the same platform can adapt to the stiffness curves of air springs of different vehicle types, so that the piston does not need to be replaced when developing vehicle types.

Although the present disclosure has been described in the specification and illustrated in the drawings on the basis of referring to various embodiments, those skilled in the art can understand that the above-mentioned embodiments are only preferred embodiments, and some technical features in the embodiments may not be necessary for solving specific technical problems, so these technical features may not be needed or omitted without affecting the solution of technical problems or the formation of technical solutions. Moreover, the features, elements and/or functions of one embodiment can be combined, integrated or coordinated with those of one or more other embodiments as appropriate, unless the combination, integration or coordination is obviously impracticable.

Various non-limiting aspects of various embodiments described herein are presented in the following clauses.
1. A piston for an air spring of a motor vehicle, wherein the piston comprises:
   a central rod; and
   a housing, comprising a top bracket, a bottom bracket and an external frame, wherein the top bracket is fixedly installed at a first end of the central rod, the bottom bracket is fixedly installed at a second end of the central rod opposite to the first end, and the external frame is connected between the top bracket and the bottom bracket around the central rod,
   wherein the external frame is elastically deformable, so that an outline shape of the external frame is changeable to change a stiffness curve of the air spring.
2. The piston according to clause 1, wherein the top bracket comprises a plurality of top spokes extending radially outward from the first end of the central rod to the external frame, and the top bracket is not elastically deformable.
3. The piston according to clause 1, wherein the bottom bracket comprises a plurality of bottom spokes extending radially outward from the second end of the central rod to the external frame, and the bottom bracket is not elastically deformable.
4. The piston according to any one of clauses 1-3, wherein the piston further comprises an intermediate bracket fixedly installed at an intermediate position between the first end and the second end of the central rod, and the intermediate bracket is not elastically deformable.
5. The piston according to any one of clauses 1-3, wherein the external frame comprises a plurality of circumferential support members arranged in a length direction of the central rod, and further comprises a plurality of longitudinal support members arranged around the central rod in a circumferential direction, each of the plurality of longitudinal support members is fixedly connected to the plurality of circumferential support members, each of the plurality of longitudinal support members and each of the plurality of circumferential support members are elastically deformable.
6. The piston according to any one of clauses 1-3, wherein the piston further comprises an outer skin comprising a top skin, a bottom skin and a lateral skin, the top skin, the bottom skin and the lateral skin form an internal cavity, the top skin covers the top bracket, the bottom skin covers the bottom bracket, and the lateral skin is fixedly connected to the external frame, so that the outer skin wraps the housing in the internal cavity.
7. The piston according to clause 6, wherein the piston further comprises an air duct extending through the bottom skin to enter the internal cavity, and the air duct is connected to an external air source, so that air can be supplied to or extracted from the internal cavity to change an air pressure in the internal cavity, so that the lateral skin drives the external frame to deform.
8. The piston according to any one of clauses 1-3, wherein the piston comprises one or more adjustment mechanisms arranged in a length direction of the central rod, and the one or more adjustment mechanisms comprise a plurality of sliding rods extending outward from the central rod, a first end of each of the plurality of sliding rod is fixedly installed to the central rod, and a second end of each of the plurality sliding rods opposite to the first end is movably supported on the external frame, and second ends of the plurality of sliding rods are configured to be capable of moving toward or away from the central rod at the same time, thereby changing the outline shape of the external frame.
9. The piston according to clause 8, wherein the one or more adjustment mechanisms comprise:
   a top support, fixedly installed on the central rod, and first ends of the plurality of sliding rods being fixedly installed on the top support;
   a bottom support, slidably installed to the central rod;
   a plurality of connection rods, a first end of each of the plurality of connection rods being fixedly installed on the bottom support, and a second end of each of the plurality of connection rods being pivotally connected to a corresponding sliding rod; and
   a driving mechanism, operatively coupled to the bottom support, to drive the bottom support to slide in the length direction of the central rod.
10. The piston according to clause 9, wherein the top support comprises an annular body and a plurality of support blocks extending radially outward from the annular body, and a number of the plurality of support blocks is the same as a number of the plurality of sliding rods, and each of the plurality of sliding rods is fixedly installed to a corresponding support block.
11. The piston according to clause 10, wherein the top support comprises an upper support and a lower support which are fixed together, wherein the upper support comprises an upper annular body and a plurality of upper support blocks extending radially outward from the upper annular body, and the lower support comprises a lower annular body and a plurality of lower support blocks extending radially outward from the lower annular body; upon the upper support and the lower support being fixed together, the upper annular body and the lower annular body form the annular body, and the upper support blocks and the lower support blocks are arranged in one-to-one correspondence, to form the plurality of support blocks.
12. The piston according to clause 11, wherein the first end of each of the plurality of sliding rods comprises a first circular protrusion and a second circular protrusion extending outward from the first end in opposite directions,
   each of the plurality of upper support blocks comprises a first upper semi-circular groove and a second upper semi-circular groove which are opened downwards at both sides, and each of the plurality of lower support blocks comprises a first lower semi-circular groove and a second lower semi-circular groove which are opened upwards at both sides,
   upon the upper support and the lower support being fixed together, the first upper semi-circular groove and the first lower semi-circular groove are butted together to form a first circular groove, and the second upper semi-circular groove and the second lower semi-circular groove are butted together to form a second circular groove, the first circular groove is used for receiving the first circular protrusion of a sliding rod of the plurality of sliding rods, and the second circular groove is used for receiving the second circular protrusion of the sliding rod.
13. The piston according to clause 12, wherein the second end of each of the plurality of connection rods has a U-shape to form a groove, and a part of each of the plurality of sliding rods is pivotally installed in the groove of a corresponding connection rod.
14. The piston according to clause 9, wherein the bottom support comprises an annular body and a plurality of support blocks extending radially outward from the annular body, and a number of the plurality of support blocks is the same as a number of the plurality of connection rods, and the first end of each of the plurality of connection rods is fixedly installed to a corresponding support block.
15. The piston according to clause 14, wherein the bottom support comprises an upper support and a lower support which are fixed together, the upper support comprises an upper annular body and a plurality of upper support blocks extending radially outward from the upper annular body, the lower support comprises a lower annular body and a plurality of lower support blocks extending radially outward from the lower annular body, upon the upper support and the lower support being fixed together, the upper annular body and the lower annular body form the annular body, and the plurality of upper support blocks and the plurality of lower support blocks are arranged in one-to-one correspondence, to form the plurality of support blocks.
16. The piston according to clause 15, wherein the first end of each of the plurality of connection rods comprises a first circular protrusion and a second circular protrusion extending outward from the first end in opposite directions,
   each of the plurality of upper support blocks comprises a first upper semi-circular groove and a second upper semi-circular groove which are opened downwards at both sides, and each of the plurality of lower support block comprises a first lower semi-circular groove and a second lower semi-circular groove which are opened upwards at both sides,
   upon the upper support and the lower support being fixed together, the first upper semicircular groove and the first lower semicircular groove are butted together to form a first circular groove, and the second upper semicircular groove and the second lower semicircular groove are butted together to form a second circular groove, wherein the first circular groove is used for receiving the first circular protrusion of a connection rod of the plurality of connection rods, and the second circular groove is used for receiving the second circular protrusion of the connection rod.
17. The piston according to clause 9, wherein the driving mechanism comprises:
   a motor, installed to the central rod through a motor bracket;
   a gear, installed to the motor;
   a rack, movably installed to the central rod and fixedly installed to the bottom support, and configured to mesh with the gear to move in the length direction of the central rod upon the motor driving the gear to rotate.
18. An air spring for a motor vehicle, wherein the air spring comprises the piston according to any one of clauses 1-17.
19. A motor vehicle, wherein the motor vehicle comprises the air spring according to clause 18

## Claims

1. A piston (1) for an air spring of a motor vehicle, wherein the piston (1) comprises:
a central rod (12); and
a housing (11), comprising a top bracket (111), a bottom bracket (112) and an external frame (113), wherein the top bracket (111) is fixedly installed at a first end of the central rod (12), the bottom bracket (112) is fixedly installed at a second end of the central rod (12) opposite to the first end, and the external frame (113) is connected between the top bracket (111) and the bottom bracket (112) around the central rod (12),
wherein the external frame (113) is elastically deformable, so that an outline shape of the external frame (113) is changeable to change a stiffness curve of the air spring.

2. The piston (1) according to claim 1, wherein the top bracket (111) comprises a plurality of top spokes (1111) extending radially outward from the first end of the central rod (12) to the external frame (113), and the top bracket (111) is not elastically deformable.

3. The piston (1) according to claim 1, wherein the bottom bracket (112) comprises a plurality of bottom spokes (1121) extending radially outward from the second end of the central rod (12) to the external frame (113), and the bottom bracket (112) is not elastically deformable.

4. The piston (1) according to any one of claims 1-3, wherein the piston (1) further comprises an intermediate bracket (15) fixedly installed at an intermediate position between the first end and the second end of the central rod (12), and the intermediate bracket (15) is not elastically deformable.

5. The piston (1) according to any one of claims 1-3, wherein the external frame (113) comprises a plurality of circumferential support members (1131) arranged in a length direction of the central rod (12), and further comprises a plurality of longitudinal support members (1132) arranged around the central rod (12) in a circumferential direction, each of the plurality of longitudinal support members (1132) is fixedly connected to the plurality of circumferential support members (1131), each of the plurality of longitudinal support members (1132) and each of the plurality of circumferential support members (1131) are elastically deformable.

6. The piston (1) according to any one of claims 1-3, wherein the piston (1) further comprises an outer skin (13) comprising a top skin (131), a bottom skin (132) and a lateral skin (133), the top skin (131), the bottom skin (132) and the lateral skin (133) form an internal cavity, the top skin (131) covers the top bracket (111), the bottom skin (132) covers the bottom bracket (112), and the lateral skin (133) is fixedly connected to the external frame (113), so that the outer skin (13) wraps the housing (11) in the internal cavity, and wherein preferably the piston (1) further comprises an air duct (14) extending through the bottom skin (132) to enter the internal cavity, and the air duct (14) is connected to an external air source, so that air can be supplied to or extracted from the internal cavity to change an air pressure in the internal cavity, so that the lateral skin (133) drives the external frame (113) to deform.

7. The piston (1) according to any one of claims 1-3, wherein the piston (1) comprises one or more adjustment mechanisms (16) arranged in a length direction of the central rod (12), and the one or more adjustment mechanisms (16) comprise a plurality of sliding rods (162) extending outward from the central rod (12), a first end of each of the plurality of sliding rod (162) is fixedly installed to the central rod (12), and a second end of each of the plurality sliding rods (162) opposite to the first end is movably supported on the external frame (113), and second ends of the plurality of sliding rods (162) are configured to be capable of moving toward or away from the central rod (12) at the same time, thereby changing the outline shape of the external frame (113).

8. The piston (1) according to claim 7, wherein the one or more adjustment mechanisms (16) comprise:
a top support (161), fixedly installed on the central rod (12), and first ends of the plurality of sliding rods (162) being fixedly installed on the top support (161);
a bottom support (163), slidably installed to the central rod (12);
a plurality of connection rods (164), a first end of each of the plurality of connection rods (164) being fixedly installed on the bottom support (163), and a second end of each of the plurality of connection rods (164) being pivotally connected to a corresponding sliding rod; and
a driving mechanism (165), operatively coupled to the bottom support (163), to drive the bottom support (163) to slide in the length direction of the central rod (12), and
wherein preferably the top support (161) comprises an annular body and a plurality of support blocks extending radially outward from the annular body, and a number of the plurality of support blocks is the same as a number of the plurality of sliding rods, and each of the plurality of sliding rods is fixedly installed to a corresponding support block.

9. The piston according to claim 8, wherein the top support (161) comprises an upper support (1611) and a lower support (1612) which are fixed together, wherein the upper support (1611) comprises an upper annular body (16111) and a plurality of upper support blocks (16112) extending radially outward from the upper annular body (16111), and the lower support (1612) comprises a lower annular body (16121) and a plurality of lower support blocks (16122) extending radially outward from the lower annular body (16121); upon the upper support (1611) and the lower support (1612) being fixed together, the upper annular body (16111) and the lower annular body (16121) form the annular body, and the upper support blocks (16112) and the lower support blocks (16122) are arranged in one-to-one correspondence, to form the plurality of support blocks.

10. The piston according to claim 9, wherein the first end of each of the plurality of sliding rods (162) comprises a first circular protrusion (1621) and a second circular protrusion (1622) extending outward from the first end in opposite directions,
each of the plurality of upper support blocks (16112) comprises a first upper semi-circular groove (16113) and a second upper semi-circular groove (16114) which are opened downwards at both sides, and each of the plurality of lower support blocks (16122) comprises a first lower semi-circular groove (16123) and a second lower semi-circular groove (16124) which are opened upwards at both sides,
upon the upper support (1611) and the lower support (1612) being fixed together, the first upper semi-circular groove (16113) and the first lower semi-circular groove (16123) are butted together to form a first circular groove, and the second upper semi-circular groove (16114) and the second lower semi-circular groove (16124) are butted together to form a second circular groove, the first circular groove is used for receiving the first circular protrusion of a sliding rod of the plurality of sliding rods, and the second circular groove is used for receiving the second circular protrusion of the sliding rod, and
wherein preferably the second end of each of the plurality of connection rods (164) has a U-shape to form a groove, and a part of each of the plurality of sliding rods (162) is pivotally installed in the groove of a corresponding connection rod.

11. The piston (1) according to claim 8, wherein the bottom support (163) comprises an annular body and a plurality of support blocks extending radially outward from the annular body, and a number of the plurality of support blocks is the same as a number of the plurality of connection rods, and the first end of each of the plurality of connection rods is fixedly installed to a corresponding support block, and
wherein preferably the bottom support comprises an upper support (1631) and a lower support (1632) which are fixed together, the upper support (1631) comprises an upper annular body (16311) and a plurality of upper support blocks (16312) extending radially outward from the upper annular body (16311), the lower support (1632) comprises a lower annular body (16321) and a plurality of lower support blocks (16322) extending radially outward from the lower annular body (16321), upon the upper support and the lower support being fixed together, the upper annular body and the lower annular body form the annular body, and the plurality of upper support blocks and the plurality of lower support blocks are arranged in one-to-one correspondence, to form the plurality of support blocks.

12. The piston (1) according to claim 11, wherein the first end of each of the plurality of connection rods (164) comprises a first circular protrusion and a second circular protrusion extending outward from the first end in opposite directions,
each of the plurality of upper support blocks comprises a first upper semi-circular groove and a second upper semi-circular groove which are opened downwards at both sides, and each of the plurality of lower support block comprises a first lower semi-circular groove and a second lower semi-circular groove which are opened upwards at both sides,
upon the upper support and the lower support being fixed together, the first upper semicircular groove and the first lower semicircular groove are butted together to form a first circular groove, and the second upper semicircular groove and the second lower semicircular groove are butted together to form a second circular groove, wherein the first circular groove is used for receiving the first circular protrusion of a connection rod of the plurality of connection rods, and the second circular groove is used for receiving the second circular protrusion of the connection rod.

13. The piston (1) according to claim 8, wherein the driving mechanism (165) comprises:
a motor (1651), installed to the central rod through a motor bracket;
a gear (1653), installed to the motor;
a rack (1654), movably installed to the central rod and fixedly installed to the bottom support, and configured to mesh with the gear to move in the length direction of the central rod upon the motor driving the gear to rotate.

14. An air spring for a motor vehicle, wherein the air spring comprises the piston (1) according to any one of claims 1-13.

15. A motor vehicle, wherein the motor vehicle comprises the air spring according to claim 14
